# EUROPEAN PATENT APPLICATION

(11) **EP 1 067 429 A1**
(43) Date of publication of application: **10.01.2001**
(21) Application number: 99500115.3
(22) Date of filing: 06.07.1999
(51) Int. Cl.: G03B 17/30

(54) **Reusable photographic cassette with a film clamping plate fixed on the spool**

(71) Applicant: Torre Sarmiento, Jorge, 36203 Vigo (Pontevedra) (ES)
(72) Inventor: Torre Sarmiento, Jorge, 36203 Vigo (Pontevedra) (ES)

(57) **Abstract**

A reusable photographic cassette comprising a casing (2) and a cover (3). The spool (1) in the interior of the casing has an excentrically positioned shaft (6), in a cylindrical cavity (4), with and attached wing (5) to clamp the film.

The shaft and the cylindrical cavity are provided with blocking means (7,8).

## Description

The invention is referred to a closed and hermetical chassis of the type of those which are employed normally in the photography. The photographic chassis of 24 x36 mm currently in use consist of a cylindrical central bobbin about the one which is coiled a photographic emulsion that is held through adhesive substances or other mechanical means drilling the final part of the film with special machines that adapt it to these bobbins. The bobbins, once laden, are introduced in a protection casing, and this casing is strapped through an or several covers.

### STATE OF THE PREVIOUS TECHNIQUE KNOWN:

They are known various types of commercial photographic chassis in format of 24 x 36 mm, that are manufactured combining plastic materials with metallics, being the plastic bobbin and the metallic casing. These chassis are strapped in factory and are not returned to use, since once extracted the photographic film to process in the laboratory, are pulled the chassis or cassettes to the garbage container, constituting an important solid residue, since are not detachable and either rechargeable, and the elements that constitute them can not be recycled jointly. It is necessary to emphasize that the plastic material personnel tend be with polystyrene base, material not recyclable by the conventional methods known.

They are known detachable chassis that are returned to use, manufacture in plastic or metallic materials, or the combinations of both, but these chassis present various drawbacks, emphasizing above all the accidental openings of the same. These chassis present other inconvenient as is that specify be dismantled to be loaded or acquitted, or an imperfect close with its mechanisms can give cause for I jam an of the film, or well to the fact that could penetrate in your interior the light, being watched then the chemistry base of the film

In the operation of surcharges is necessary to have adhesive materials or special cutters that drill the final tab of the film. Exist a photographic chassis more advanced, known worldwide as ADVANTIX PHOTO SYSTEM (APS), that is put to arrangement of the public on closed cassettes, and that permits the exit of the photographic film once the said cassette or chassis has been introduced in the photographic camera; once it exposed the film to the light, by effect of the mechanisms of the photographic camera, this returns to penetrate in the chassis thoroughly, serving the cassette as store of the negatives. However, to extract the film are required special machines, and furthermore this system does not anticipate the possibility of extracting the film thoroughly to substitute it additionally.

It is not known system some that permit surcharges it of the chassis with photographic film without is required that the same will be previously dismantled.

### EXPOSITION OF THE INVENTION:

The present invention tries to providing a deliberate photographic chassis preferably for film of the format of 24 x 36 mm, that it is reusable but not detachable, permitting his load and Unloading for undefined occasions, without is required by so much the disassembly of the pieces that compose it. It is accomplished thoroughly in plastic material and thinking about some low production costs, so that could be employed by fans, professional, and by the commercial consumer, reducing furthermore the solid residues level in a way important, maintaining the same safety conditions for the film that a chassis of the type of the current.

Also it has been solved that the chassis could be loaded and unloaded without the need of the special machines employment, in order to power be employed so much by professional as fans to the photography, sufficing the employment of a scissors to carry out the load operation, and the employment of a plate of plastic for power to effect the unloading of the same. Preferably it has been thought in the utilization of the own drills that in a way longitudinal and parallel possesses the conventional photographic film of 35 mm, in order to carrying out the fixing of the film to the interior bobbin of the chassis or cassette.

According to the invention, this objective is procured modifying the internal structure of the casing and of the central bobbin of the chassis, coupling to this last a mobile screen, endowed of a draft shaft, and whose external form is solidary to the diameter of the bobbin and whose draft shaft is eccentric to that of the own bobbin; endowed in addition to some step guides for the film and two subjection flange for this by means of the drills that the own film possesses in their foreign edges; endowed in addition to a buttoms mechanism or a flat or convex dock that permits such screen to acquire solely two possible positions, that is to say, opened thoroughly or closed also thoroughly, with with respect to the bobbin, according to the chassis is found loaded or acquitted, with photographic film. The foreign form of the screen is solidary with the cylindrical form of the bobbin so that when is found closed on this, both certify a cylindrical set only. The casing possesses recess an next to the step groove of the film, where is coupled the foreign edge of the screen, in order to facilitating the step of the film from the foreign, without interruption. In this way it is intended that when the chassis be released, the screen is found opened and immobile in that position by the action of the dock or buttons; and when the chassis be loaded with film, the bobbin and screen form an only cylindrical unit.

A chassis accomplished according to the invention, in the one which the modifications have been accomplished in a way internal exclusively, it permits that it will be employed in any photographic camera of the market, of universal step of 24 x 36 millimeters, known vulgarly as format of 35 mm, without need of introducing reforms in the same. The thus accomplished chassis is thoroughly hermetical to the step of the light, by be strapped, and it is resistant to any type of accidental opening on the part of manipulator.

Present furthermore the advantage of the fact that it can be surcharged of virgin film, once it has been extracted the used film from your interior, without the need from dismantling the parts that compose it, neither to employ special tools.

This is procured through the automatic opening action and close of the screen, determined each position in function of the fact that the force will be of drag toward the interior, or laden, in whose case is closed said screen on the central bobbin; or well such force of drag will be exercised in direction contradicts, for the extraction of the film, in whose case to be arrived to the final section of the film by extracting, screen is opened, remained in this position until a new surcharges. Other of the advantages of the invention is that to the power be employed in undefined occasions, it is considered a not disposable product. Other advantage is that it is considered an invention that it can be executed in material totally plastic, being because of this recyclable at the end of your useful life. The last novelty is that can be known by means of the tact, the moment in which the chassis is loaded with film, due to the fact that the central bobbin can turn in both directionses without hobble some. When the chassis does not contain film, and by so much the screen is found opened, it can not be turned the bobbin in one of the two directions due to the fact that the extreme edge of the screen is introduced in a recess accomplished to the effect in the interior of the casing, that stops by so much its traveled; it is constituted thus the indicative with load or unloading of the chassis.

### DESCRIPTION OF THE DRAWINGS:

The invention will be described now by means of an example with reference to the attached drawings, according to those which:

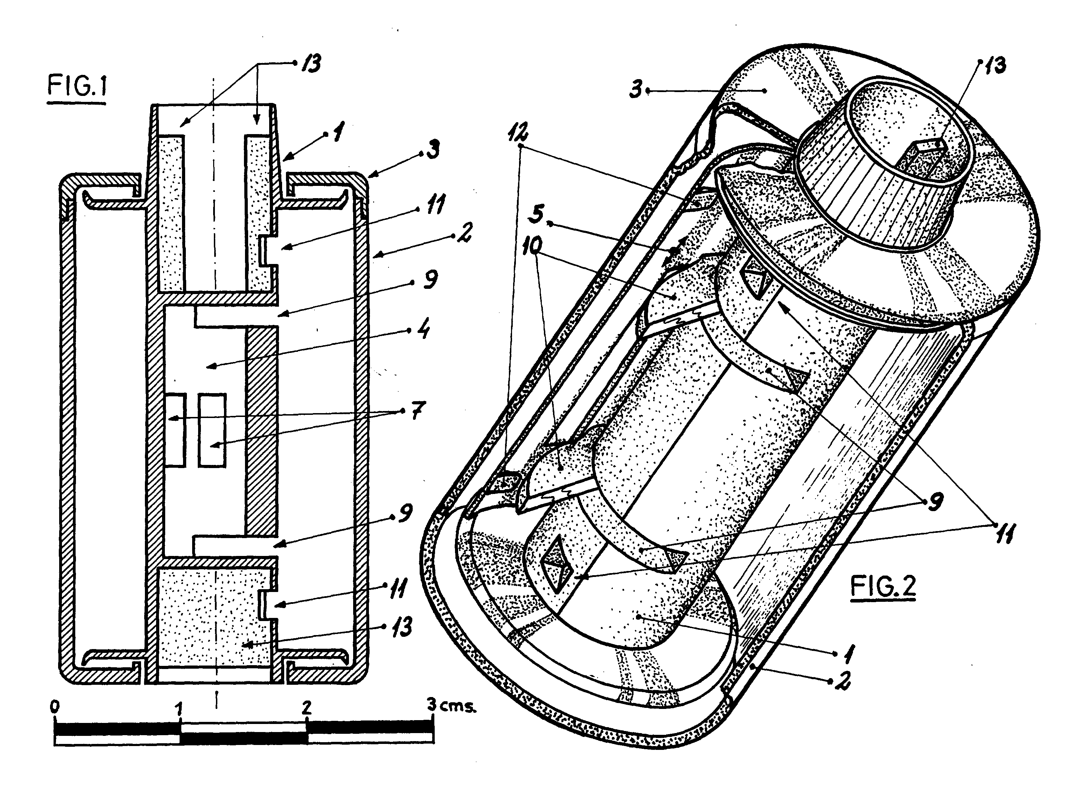

The Figure 1 is a longitudinal complete section of the chassis. In this figure can deal the principal internal parts of the chassis.

The Figure 2 is a sight in explosion of the chassis. In this figure can deal the internal parts thoroughly. It is included the screen (5) in position of open, that is to say, disposed to receive a film load.

The Figure 3 is a sight in appeal of the screen (5), in the one which can be seen the parts that compose it. In this figure have been labeled two sections (F-F'), and (E-É), in order to visualizing the form of the shaft of this piece.

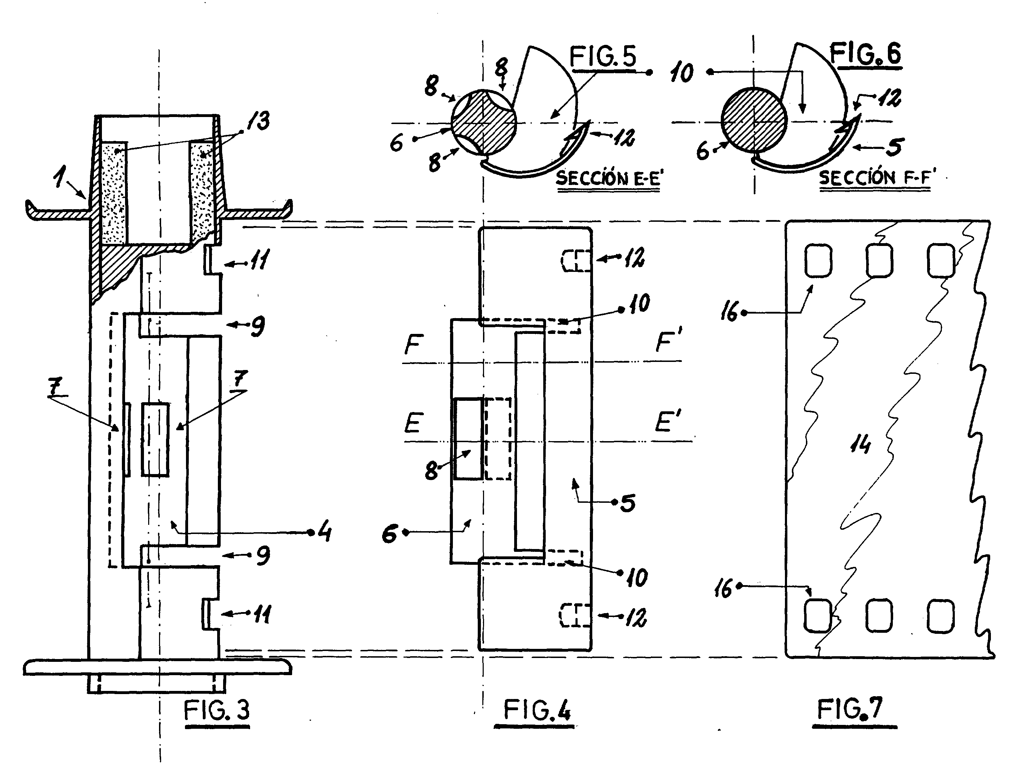

Said sections can be observed in the figures 5 and 6, respectively.

The figure 6 is the section (F-F'), of the screen (5), where it can deal clearly the form of the guide (10), as well as the subjection flanges (12).

The Figure 7 is a sight in appeal of a final section of the photographic film (14), that there has of be introduced in the chassis by the entry groove (15). In this film (14) can deal the drills (16) that accomplishes the manufacturer by defect, and that will be coupled through the guides (10) in the flanges (12).

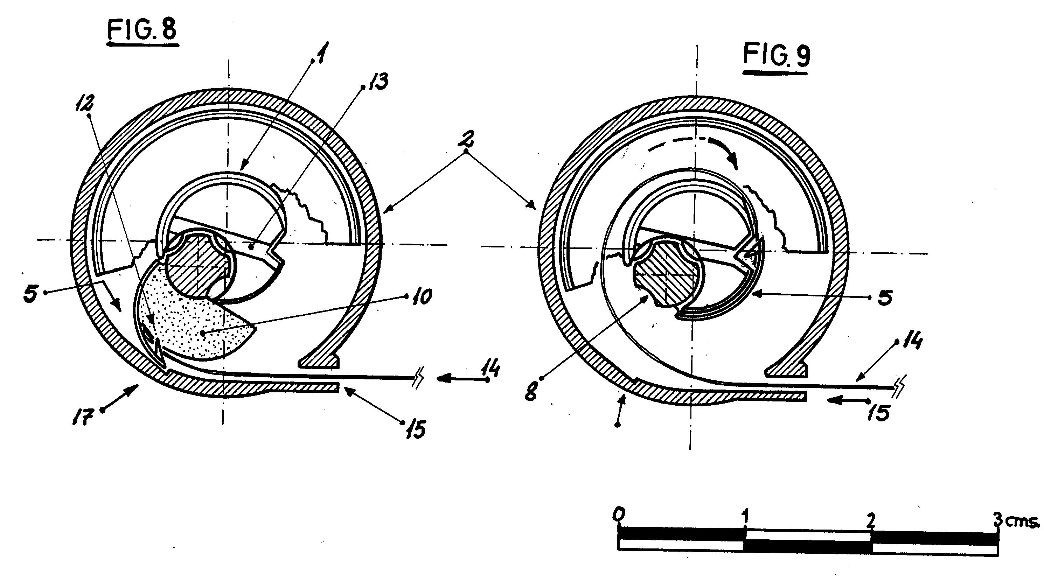

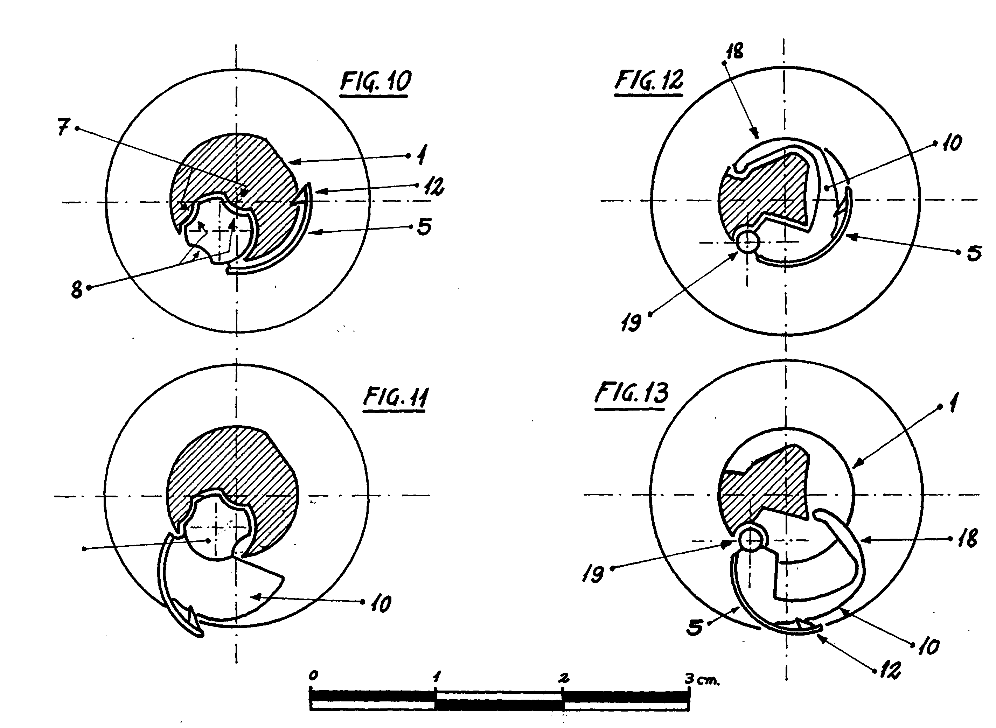

The Figures 8 and 9 are complementary mutually and explanatory of the load procedure with the film (14) in the chassis. In the Figure 8 can deal the screen (5) in position of prepared for the load. In the Figure 9 can deal the solidary position that acquires the screen (5) with respect to the bobbin (1), after be pushed after be effected the film load.

The Figures 10 and 11 are complementary mutually, and show the closed and opened screen, respectively, in relationship to the bobbin (1), being determined each position by the effect of the button (7), with respect to the grooves (8).

The Figures 12 and 13 are complementary mutually. The Figure 12 shows the screen (5) in position of closed, and the Figure 13 in position of open. In these figures can deal that is substituted the shaft (6) of the screen (5), by a different shaft (19), more eccentric and small than the previous described. Disappear the buttons (7) and its corresponding grooves (8), being the close and opening mechanism determined by a flat dock (18), that emerges of the guides (10), and that determines a second possibility of subjection of the screen (5), in its possible positions.

### DESCRIPTION IN A WAY OF PREFERRED ACCOMPLISHMENT:

To the sight of the commented figures, it can be observed already a form of preferred accomplishment, according to the one which all the components of the mechanism would be manufactured in plastic materials or their derivatives, employing injection systems in predetermined molds, widely extended in the common industrial applications. In the load groove (15) would be employed an opaqueness material to the light, the already known small carpets of velvet material synthetic.

The invention is composed of four pieces: The first and principal is constituted by a bobbin (1), the one which has a cylindrical cavity (4) in whose interior will be housed a mobile screen (5), determining his draw a shaft (6). The cylindrical cavity (4) has a series buttons (7) that, solidary with some grooves (8) of the shaft (6), determine the position of open or closed of such screen (5), maintaining it always in an or other position until is exercised a force of push exercised through the sideburnss of drag (13), such that is produced the position change of this piece. According to is exposed in the Figures 10 and 11, and 12 and 13, this automatic mechanism can be substituted by a flat dock (18), that emerges of the final of the guides (10) and embraces to the bobbin (1). Is substituted the shaft (6), by a new shaft (18) more eccentric than the previous, of smaller diameter and of smooth surface. The screen (5) is composed at the same time by some guides (10), solidary with some channels (9) practiced in the bobbin (1), and by those which are slid these guides (10) to be opened or be closed the screen (5), according to is tried to an operation with film or exhaust load to this. These guides (10) determine the step of a photographic film (14) flexible, according to Figure 7, whose first section is not drilled, between such guides (10) and the flanges (12), until the drills (16) reach the flanges (12), being defeated then the flexibility of the film, and remaining by so much holds this film (14) by their natural drills (16), being this the predetermined subjection system. The flanges (12) are solidary with the grooves (11) practiced on the bobbin (1) for the housing of these when the screen (5) is closed on the shaft of the bobbin (1).

The assembly procedure of the invention would be: once it mounted the screen (5) on the bobbin (1) through your shaft (6), this will be introduced in the casing (2) of the chassis in the position of open if such introduction is accomplished without coupling the film (14). below is closed the system with the cover (3), that it can go hit or by means of pressure.

## Claims

1. REUSABLE PHOTOGRAPHIC CHASSIS, NOT DETACHABLE, WITH INDICATIVE WITH LOAD AND UNLOADING, characterized by be composed by a cover (3), a casing (2), endowed this of a load and unloading groove (15). In the such casing interior (2) is housed a bobbin (1), and coupled jointly to this through a shaft (6), there is a mobile screen (5), forming the set of these coupled pieces mutually an only in a way hermetical closed unit, or chassis, characterized because do not need be dismantled its pieces in the load and unloading operations of a photographic film (14). The bobbin (1), it is characterized because has a cylindrical cavity (4), eccentric with respect to his draft shaft, in whose interior is coupled the screen (5) by means of a shaft (6) that contains it, solidary with such cylindrical cavity (4), and with a tolerance such that permits the movement of such screen draft (5) on his shaft (6) in two positions only of complete close on the bobbin (1) or complete opening against the interior wall of the casing (2), being determined these two positions by the load or unloading state to the chassis with a photographic film (14). The two possible positions of open or closed of the screen (5) are determined by be endowed the cylindrical cavity (4) of two butons (7), solidary with three you reduce (8) practiced in the shaft (6) of the screen (5), that immobilize to this screen (5) in only those two possible positions, depending on the sense toward the one which is exercised a force of push. The screen (5) is characterized because possesses two flanges (12) in its extremes superior and inferior, whose separation comes determined jointly with the separation that exists between the drills (16) of the film (14). These flanges (12) determine together with two guides (10) the subjection of a photographic film (14) to these flanges (12), by means of the two drills (16), practiced in both foreign extremes of the film (14). The guides (10) are solidary with the channels (9) of the bobbin (1), the same as the flanges (12) are solidary with the you recess (11) of the bobbin (1), determining that the screen (5) form an only perfect cylindrical body with the bobbin (1) when such screen (5) is found in position of closed. In the interior of the casing (2) has been anticipated reduce an (17), located about the load and unloading groove (15), that determines the fixing of the screen (5) in the necessary correct position to be produced a photographic film load (14).

2. REUSABLE PHOTOGRAPHIC CHASSIS, NOT DETACHABLE, WITH INDICATIVE WITH LOAD AND UNLOADING, according to claim 1, characterized because the screen (5) is endowed of a shaft (19) more eccentric and of smaller diameter, and by two flat docks (18) that emerge from the extremes of the guides (10) and lengthwise to these, and that come to embrace to the bobbin (1) or not, determining in this way the two possible positions of open or closed that it can acquire the screen (5).

3. REUSABLE PHOTOGRAPHIC CHASSIS, NOT DETACHABLE, WITH INDICATIVE WITH LOAD AND UNLOADING, according to previous claims, characterized because the casing (2) is endowed internally of a reduce longitudinal parallel to the draft shaft of the bobbin (1), located about the load and unloading groove (15), solidary with the foreign edge of the screen (5), that prevents the revolving movement of such bobbin (1) when the screen (5) is found opened.

4. REUSABLE PHOTOGRAPHIC CHASSIS, NOT DETACHABLE, WITH INDICATIVE WITH LOAD AND UNLOADING, according to previous claims, characterized because the subjection system of the photographic film (14) is accomplished by means of its natural drills (16) more extreme, that are introduced between some guides (10) and some flanges (12), that determine that the extreme of the film (14) not drilled is flexible first, for then to recover your flat original form to be introduced the drills (16) in the flanges (12), constituting this the subjection manner and fixing of the film (14) to the screen (5) and by so much, to the bobbin (1), of the one which this screen (5) is solidary.

5. REUSABLE PHOTOGRAPHIC CHASSIS, NOT DETACHABLE, WITH INDICATIVE WITH LOAD AND UNLOADING, according to previous claims, characterized because the subjection flanges (12) of the screen (5) is separated mutually at a distance equivalent to the separation that exists between the two lines of drills plurality (16) opposite of the photographic film (14), practiced by defect by the manufacturer of this film, being used these final drills (16) for the such film subjection (14) to the bobbin (1) by means of the flanges (12) of the screen (5).
